# DEMANDE DE BREVET EUROPEEN

(11) **EP 3 964 720 A1**
(43) Date de publication de la demande: **09.03.2022**
(21) Numéro de dépôt: 21194911.0
(22) Date de dépôt: 03.09.2021
(51) Int. Cl.: F16B 5/02

(54) **DISPOSITIF DE FIXATION D'UN PANNEAU SUSCEPTIBLE DE SUBIR UNE DÉFORMATION THERMIQUE SUR UN ÉLÉMENT DE CARROSSERIE OU DE CAISSE DE VÉHICULE**

(30) Priorité: 04.09.2020 FR 2008986
(71) Demandeur: Prodic, 74370 Argonay (FR)
(72) Inventeur: BALMA, Raphael, 74230 THONES (FR)
(74) Mandataire: Novaimo

(57) **Abrégé**

Dispositif de fixation (1) d'un panneau (21) susceptible de subir une déformation thermique sur un élément de carrosserie ou de caisse (22) d'un véhicule, le dispositif de fixation (1) étant destiné à être disposé dans au moins un orifice (23) dudit panneau et comprenant un support (3), configuré pour recevoir au moins un élément de fixation, et un organe d'absorption (4) d'une déformation thermique du panneau (21), l'organe d'absorption (4) comprenant au moins un organe radial (42) au moins en partie élastiquement déformable, une face distale (43) de l'organe radial (42) étant configurée pour s'étendre au moins partiellement au contact d'un bord interne (231) d'un orifice (23) du panneau recevant le dispositif de fixation (1) et pour absorber une déformation thermique dudit panneau.

## Description

La présente invention concerne un dispositif de fixation d'un panneau susceptible de subir une déformation thermique sur un élément de carrosserie ou de caisse d'un véhicule, notamment d'un véhicule automobile. L'invention concerne également un agencement d'un tel dispositif de fixation sur un panneau monté sur un élément de carrosserie ou de caisse d'un véhicule. Enfin l'invention concerne un véhicule comprenant le(s)dit(s) agencement et/ou dispositif de fixation.

Dans le domaine automobile, des panneaux, que ce soit d'habillage intérieur ou encore de carrosseries, sont classiquement montés fixes sur une structure ou sur un élément de carrosserie ou de caisse du véhicule, notamment d'un véhicule utilitaire. De tels panneaux peuvent, à titre d'exemple, être réalisés dans des matériaux plastiques, composites ou métalliques et sont susceptibles de subir une déformation thermique.

En effet, au sein du véhicule, la température est amenée à varier de manière non négligeable, par exemple entre -30°C et +50°C, du fait des conditions climatiques extérieures et du fonctionnement des équipements du véhicule. Une telle variation s'accompagne de déformations thermiquement induites des panneaux, notamment au niveau des dispositifs de fixation maintenant ces panneaux solidaires d'éléments de carrosserie ou de caisse. Ces déformations peuvent consister en une dilatation ou en une contraction thermique de l'ensemble d'un panneau considéré qui tendent à être plus importantes que des déformations susceptibles d'être observées dans l'élément de carrosserie ou de caisse sur lequel est fixé ledit panneau.

Ces déformations génèrent des contraintes physiques sur les dispositifs de fixation pouvant résulter en leur usure prématurée, voire en leur destruction. Egalement, il peut être constaté des déformations permanentes et/ou des dégradations progressives des zones des panneaux adjacentes auxdits dispositifs de fixation.

Par ailleurs, ces déformations sont susceptibles de déplacer, voire déloger, les panneaux par rapport à leur emplacement initial lorsque les dispositifs de fixation s'avèrent inadaptés.

L'invention s'inscrit dans ce contexte et vise à résoudre les problèmes susmentionnés en proposant un dispositif de fixation permettant d'assurer un maintien fiable et à moindre coût adapté aux déformations thermiquement induites de panneaux montés sur un élément de carrosserie ou de caisse.

L'invention propose un dispositif de fixation d'au moins un panneau susceptible de subir une déformation thermique sur un élément de carrosserie ou de caisse d'un véhicule, le dispositif de fixation étant destiné à être disposé dans au moins un orifice dudit panneau. Le dispositif de fixation comprend au moins un support, configuré pour recevoir au moins un élément de fixation, et un organe d'absorption d'une déformation thermique dudit panneau, le dispositif de fixation étant caractérisé en ce que :
- le support comprend un socle percé d'au moins une perforation traversante et un manchon creux émergeant d'un pan inférieur du socle et bordant ladite perforation, la perforation et le manchon délimitant une zone de réception de l'au moins un élément de fixation,
- l'organe d'absorption comprend un collier centré sur un axe principal et configuré pour entourer tout ou partie du manchon du socle,
- l'organe d'absorption comprend au moins un organe radial au moins en partie élastiquement déformable et émergeant d'une circonférence externe du collier, une face distale de l'organe radial la plus distante de l'axe principal étant configurée pour s'étendre au moins partiellement au contact d'un bord interne de l'orifice du panneau et pour absorber une déformation thermique du panneau comprenant ledit orifice.

Selon un exemple de réalisation, l'organe d'absorption peut être une pièce rapportée amovible montée sur le manchon du support.

Selon un exemple de réalisation alternatif, l'organe d'absorption et le support forment un ensemble monobloc.

Selon une variante de réalisation, le manchon du support peut comprendre au moins deux languettes séparées par des encoches, les languettes étant configurées pour être déformées et/ou déplacées par insertion de l'au moins un élément de fixation.

Selon une caractéristique optionnelle de la présente invention, l'au moins un organe radial peut comprendre au moins un élément d'affaiblissement.

L'au moins un organe radial peut présenter une structure évidée et/ou fermée.

Selon une caractéristique optionnelle, l'au moins un organe radial peut comprendre une embase, comprise dans la circonférence externe du collier, un flanc distal, comprenant la face distale, et au moins un flanc latéral reliant l'embase et le flanc distal.

Selon une caractéristique optionnelle, l'embase peut présenter une dimension inférieure ou sensiblement inférieure à une dimension du flanc distal. L'embase de l'organe radial peut être définie par un secteur angulaire α, issu de l'axe principal, compris entre 20 et 160 °.

Selon une caractéristique de l'invention, l'organe d'absorption peut comprendre un pluralité d'organes radiaux, des organes radiaux adjacents étant séparés par un secteur angulaire µ, relativement à l'axe principal, compris entre 10 et 160°.

Selon une caractéristique optionnelle, le manchon et le collier peuvent présenter des sections complémentaires circulaires, carrées, rectangulaires ou ellipsoïdales et/ou une hauteur du manchon est supérieure ou égale à une hauteur de l'organe d'absorption, notamment du collier de l'organe d'absorption.

Selon une caractéristique optionnelle, le socle du support peut comprendre au moins un renfoncement configuré pour recevoir tout ou partie d'une tête d'un élément de fixation. Particulièrement, au moins une partie d'un fond du renfoncement peut comprendre un bossage et/ou une rainure.

Selon un mode de réalisation particulier, le dispositif de fixation selon l'invention peut comprendre au moins un capot rapporté amovible configuré pour être fixé sur le socle et pour couvrir au moins en partie un élément de fixation.

Selon une caractéristique d'un tel mode de réalisation, le socle peut comprendre au moins un moyen primaire de fixation et le capot peut comprendre au moins un moyen secondaire de fixation, complémentaire du moyen primaire de fixation.

L'invention concerne également un agencement comprenant au moins un panneau, réalisé dans un matériau susceptible de subir une déformation thermique, et un élément de carrosserie ou de caisse d'un véhicule, notamment un véhicule automobile, le panneau étant superposé sur l'élément de carrosserie ou de caisse le long d'au moins une direction. L'agencement est caractérisé en ce qu'il comprend au moins un dispositif de fixation tel que précédemment exposé et en ce que:
- le panneau comprend une première face, une deuxième face, opposée à la première face et tournée vers l'élément de carrosserie ou de caisse, et un orifice traversant délimité par un bord interne ;
- l'organe d'absorption du dispositif de fixation est disposé dans l'orifice du panneau de sorte que la face distale de l'au moins un organe radial s'étend au moins partiellement au contact du bord interne de l'orifice ;
- le socle est disposé sur le panneau, le manchon du socle du dispositif de fixation s'étendant au moins en partie au travers du dispositif d'absorption et de l'orifice du panneau ;
- l'agencement comprend au moins un élément de fixation traversant le manchon du socle de sorte à fixer le panneau sur l'élément de carrosserie ou de caisse.

L'invention concerne enfin un véhicule, notamment un véhicule automobile, comprenant au moins un dispositif de fixation et/ou au moins un agencement tels que décrit précédemment.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique vue de côté d'un agencement d'un panneau sur un élément de carrosserie ou de caisse d'un véhicule, l'agencement comprenant un dispositif de fixation réalisé selon un premier mode de réalisation.
La figure 2 représente une vue de côté en coupe éclatée du dispositif de fixation selon le premier mode de réalisation.
La figure 3 représente une vue de côté en coupe éclatée d'une variante du dispositif de fixation selon le premier mode de réalisation.
La figure 4 est une représentation schématique vue de dessous du dispositif de fixation selon le premier mode de réalisation lorsqu'il est monté dans le panneau et est dans une configuration au repos.
La figure 5 est une représentation schématique vue de dessous du dispositif de fixation illustré à la figure 3 lorsque celui-ci est dans une configuration déformée.
La figure 6 est une représentation simplifiée d'un premier exemple de réalisation d'un organe d'absorption du dispositif de fixation.
La figure 7 est une représentation simplifiée d'un deuxième exemple de réalisation de l'organe d'absorption du dispositif de fixation.
La figure 8 est une représentation simplifiée d'un troisième exemple de réalisation de l'organe d'absorption du dispositif de fixation.
La figure 9 est une représentation schématique en coupe d'un agencement comprenant un dispositif de fixation selon un deuxième mode de réalisation.
La figure 10 est une représentation schématique vue de côté du dispositif de fixation selon le deuxième mode de réalisation lorsqu'il est assemblé.
La figure 11 représente une vue en coupe éclatée du dispositif de fixation selon le deuxième mode de réalisation.

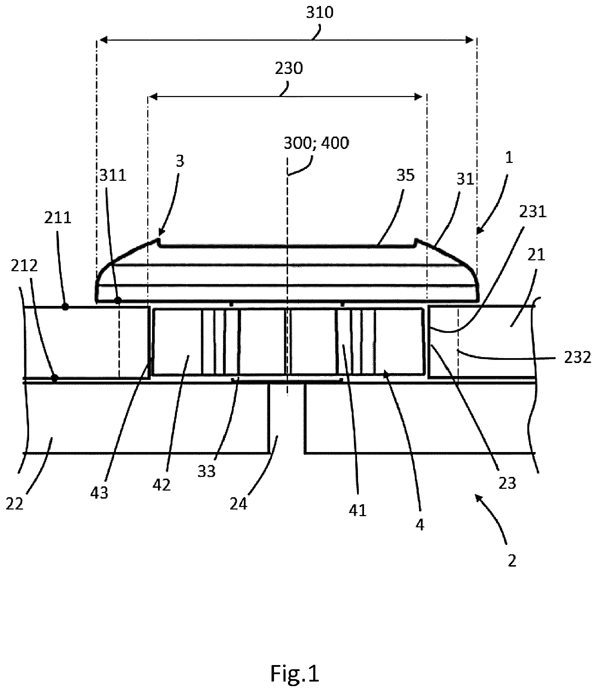

Les figures 1 à 4 illustrent des exemples de réalisation d'un premier mode de réalisation d'un dispositif de fixation 1 selon l'invention. La figure 1 est une représentation schématique d'une partie d'un agencement 2 d'au moins un panneau 21 susceptible de subir une déformation thermique sur un élément de carrosserie ou de caisse 22 d'un véhicule, notamment un véhicule automobile comprenant ledit dispositif de fixation 1.

Particulièrement l'agencement 2 est destiné à des véhicules automobiles utilitaires, notamment à l'aménagement d'un espace arrière de stockage et/ou de chargement dudit véhicule utilitaire. Il est entendu que, dans l'ensemble des figures, les dimensions et espacements entre les différents composants ont été exagérés à des fins de clarté. Egalement, à des fins de clarté, l'agencement 2 illustré comprend un unique panneau 21. L'invention pourra néanmoins s'étendre, par exemple, à une pluralité de panneaux 21 montés sur un élément 22 de carrosserie ou de caisse, les différents panneaux 21 étant superposés les uns sur les autres le long d'au moins une direction.

L'agencement 2 selon l'invention comprend un panneau 21, réalisé dans un matériau susceptible de subir une déformation thermique, et un élément de carrosserie ou de caisse 22, le panneau 21 étant fixé, ou autrement dit superposé, sur l'élément de carrosserie ou de caisse 22. On entend par « susceptible de subir une déformation thermique » que le panneau est réalisé dans un matériau susceptible de provoquer la dilatation ou la contraction thermique du panneau à des températures classiquement observées dans des véhicules, par exemple de l'ordre de - 30°C à +50°C. A titre d'exemple non limitatif, un tel panneau 21 peut être réalisé dans un matériau plastique, un matériau composite ou encore un matériau métallique. En outre, le panneau 21 tend à présenter un coefficient de dilatation thermique supérieur ou sensiblement supérieur à celui des matériaux classiquement utilisés pour réaliser l'élément sur lequel est fixé le panneau 21, à savoir l'élément de carrosserie ou de caisse 22. Il est donc nécessaire d'accommoder des variations plus conséquentes de la taille et de la forme d'un tel panneau du fait des fluctuations thermiques observées dans le véhicule.

De manière particulière, optionnelle, le panneau peut présenter une structure alvéolaire.

Par « superposé » on entend que le panneau 21 est fixé sur l'élément 22 de sorte que le panneau 21 et l'élément de carrosserie ou de caisse 22 sont adjacents, voire en contact, l'un de l'autre le long d'au moins une direction. A titre d'exemple, le panneau 21 peut consister en un panneau de sol de l'espace arrière du véhicule, verticalement superposé à l'élément de carrosserie ou de caisse 22, ou en un panneau latéral transversalement superposé sur l'élément de carrosserie ou de caisse 22.

Le panneau 21 comprend une première face 211, par exemple tournée vers un intérieur du véhicule, une deuxième face 212, opposée à la première face 211 et tournée vers l'élément de carrosserie ou de caisse 22, et un orifice 23 traversant délimité par un bord interne 231 du panneau 21.

L'agencement 2 comprend également au moins un dispositif de fixation 1 selon l'invention, disposé au moins en partie dans l'orifice 23 traversant du panneau 21.

De manière générale, le dispositif de fixation 1 selon l'invention comprend au moins un support 3, configuré pour recevoir au moins un élément de fixation, non représenté, tel qu'une vis, un clou, une tête d'un clip ou tout autre moyen connu, et un organe d'absorption 4 d'une déformation thermique du panneau 21.

Le support 3 comprend un socle 31 percé d'au moins une perforation 32 traversante et un manchon 33 creux émergeant d'un pan inférieur 311 du socle 31 et bordant ladite perforation 32. La perforation 32 et le manchon 33 délimitent ainsi une zone de réception 34 de l'au moins un élément de fixation. A titre d'exemple, la zone de réception 34 de l'élément de fixation, peut être sensiblement cylindrique ou sensiblement tronconique, et, de manière préférentielle, de section circulaire. De manière optionnelle, une périphérie interne 332 du manchon 33 peut être au moins en partie filetée. Particulièrement, la perforation 32 et le manchon 33 sont centrés sur un axe d'extension 300 du support 3.

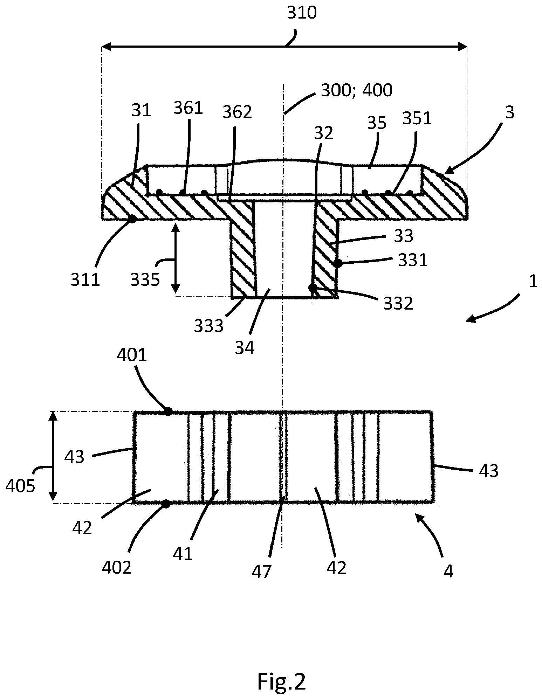

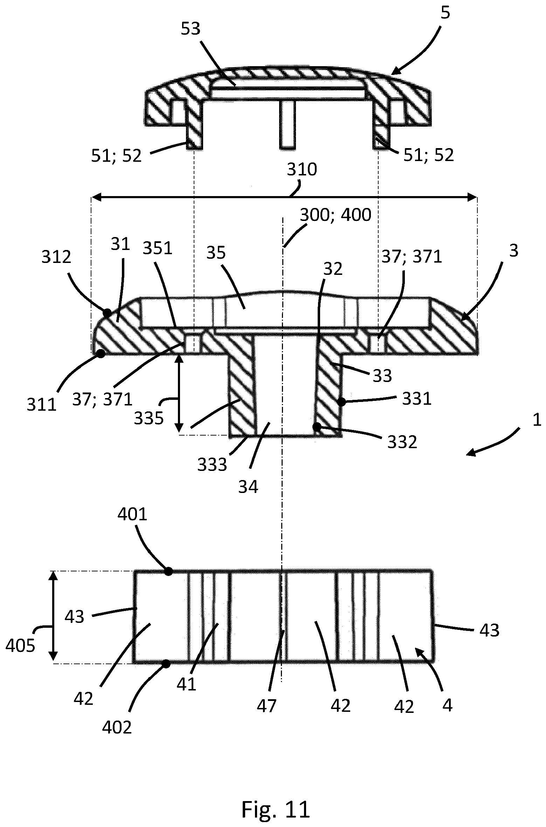

Tel qu'illustré aux figures 2 et 11, le manchon 33 peut présenter une structure continue, ou en d'autres termes, le manchon présente une périphérie interne 332 continue.

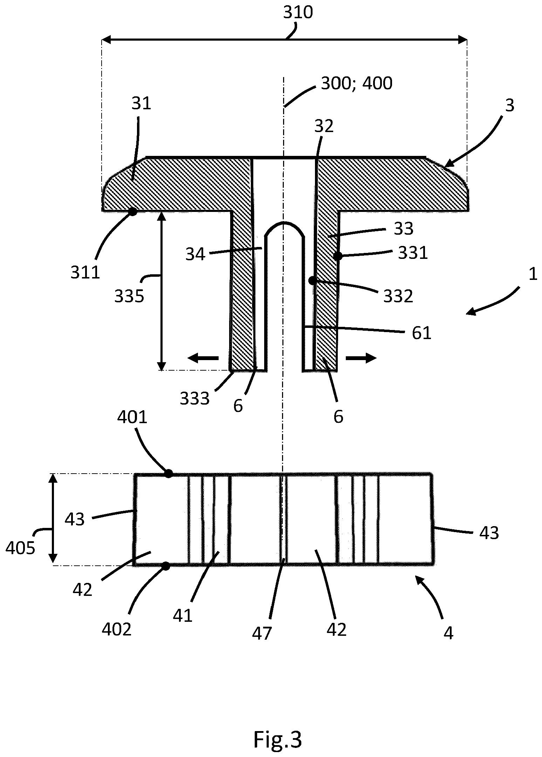

Selon une alternative illustrée à la figure 3, le manchon 33 du support 3 peut présenter une structure discontinue. Notamment, le manchon 33 peut comprendre au moins deux languettes 6 séparées par des encoches 61, les languettes 6 étant configurées pour être déformées et/ou déplacées par insertion de l'au moins un élément de fixation, non représenté, notamment une tête de clip ou vis. Les languettes 6 sont configurées pour s'écarter l'une de l'autre au moins au niveau d'une extrémité libre 333 du manchon 33 lorsque l'élément de fixation est inséré dans le support 3, un tel déplacement étant schématiquement illustré par des flèches dans la figure 3.

Le socle 31 peut présenter, de manière non limitative, une forme sensiblement circulaire. De manière préférentielle, le support 3 est dimensionné de sorte à présenter une dimension principale 310 supérieure à une dimension principale 230 de l'orifice 23. On entend par « dimension principale 310, 230 » une dimension la plus grande du socle 31 et de l'orifice 23 respectivement. Notamment, pour un socle 31 et/ou un orifice 23 sensiblement circulaire, la dimension principale 310 consiste en un diamètre tandis que pour un socle 31 et/ou un orifice 23 sensiblement carré, rectangulaire ou polygonal, la dimension principale 310 consiste en une diagonale.

Le socle 31 peut présenter une structure sensiblement plane ou bombée. De manière optionnelle mais préférentielle, le socle 31 du support 3 comprend au moins un renfoncement 35 configuré pour recevoir tout ou partie d'une tête de l'élément de fixation. Optionnellement, au moins une partie d'un fond 351 du renfoncement 35 peut comprendre au moins un bossage 361 et/ou une rainure 362 configuré(e)(s) pour optimiser le maintien de l'élément de fixation par rapport au support 3 du dispositif de fixation 1 lors de manœuvres de manutention.

L'organe d'absorption 4 comprend un collier 41 centré sur un axe principal 400 et configuré pour entourer tout ou partie du manchon 33 du socle 31. En d'autres termes, le manchon 33 est configuré pour s'étendre au travers d'une portion ajourée 411, délimitée par le collier 41, de l'organe d'absorption 4. Particulièrement, l'organe d'absorption 4 peut s'étendre au moins en partie au contact du pan inférieur 311 du socle 31 du support 3.

L'organe d'absorption 4 comprend au moins un organe radial 42 au moins en partie élastiquement déformable et émergeant d'une circonférence externe 412 du collier 41. L'au moins un organe radial 42 comprend une face distale 43, la plus distante de l'axe principal 400, configurée pour s'étendre au moins partiellement au contact du bord interne 231 de l'orifice 23 du panneau 21 et pour absorber une déformation thermique dudit panneau.

Notamment, la face distale 43 peut être au moins en partie plane. Alternativement, la face distale 43 peut être sensiblement courbée. Selon un exemple particulier de réalisation, optionnel, la face distale 43 peut présenter une forme au moins en partie sensiblement complémentaire d'une forme du bord interne 231 de l'orifice 23.

Avantageusement, l'organe d'absorption 4 peut consister, tel qu'illustré, en une pièce rapportée amovible montée sur le manchon 33 du support 3. Le support 3 et l'organe d'absorption 4 peuvent ainsi être réalisés dans des matériaux distincts. Notamment, le support 3 peut être réalisé dans un matériau sensiblement rigide tel qu'un polymère du type polyamide. L'organe d'absorption 4 est, de préférence, au moins en partie réalisé dans un matériau plus souple que le support 3, par exemple un matériau élastiquement déformable tel que du polyéthylène ou un matériau à mémoire de forme.

De la sorte, l'organe d'absorption 4 peut présenter différentes configurations. Notamment l'organe d'absorption présente au moins une configuration « initiale » ou « au repos », dans laquelle l'organe d'absorption n'est pas soumis à des contraintes physiques dues au panneau, et une ou plusieurs configurations « déformée » dans lesquelles le bord interne 231 de l'orifice 23 exerce un effort sur l'au moins un organe radial 42 de l'organe d'absorption 4, entrainant ainsi sa déformation. Il est entendu que l'organe d'absorption selon l'invention est configuré pour passer de la configuration « initiale » à la configuration « déformée » et inversement une fois l'effort exercé par le panneau interrompu.

Préférentiellement, l'au moins un organe radial 42 et le collier 41 de l'organe d'absorption 4 forment un ensemble monobloc, c'est-à-dire qu'ils ne peuvent être dissociés l'un de l'autre sans résulter en la dégradation et/ou la destruction de l'organe d'absorption 4.

Selon une alternative non représentée, le support 3 et l'organe d'absorption 41 peuvent former un ensemble monobloc, c'est-à-dire qu'ils ne peuvent être séparés l'un de l'autre sans entraîner la détérioration, voire la destruction, du dispositif de fixation 1. Notamment, le support 3 et l'organe d'absorption 4 selon une telle alternative peuvent être reliés au niveau du pan inférieur 311 du socle 31 et/ou au niveau d'au moins une partie du collier 41. Le dispositif de fixation 1 est alors, de préférence, au moins en partie réalisé dans un matériau souple tel que précédemment exposé.

Lorsque le dispositif de fixation 1 est assemblé, le collier 41 de l'organe d'absorption 4 entoure le manchon 33 du support 3. Avantageusement, le manchon 33 et le collier 41 présentent des sections complémentaires pouvant, à titre d'exemple être circulaires, carrées, rectangulaires ou ellipsoïdales. Notamment, une circonférence interne 413 du collier 41 peut s'étendre, au moins en partie, au contact d'une périphérie externe 331 du manchon 33, par exemple de sorte à l'enserrer. De manière alternative, le collier 41 peu présenter un jeu par rapport à la périphérie externe 331 du manchon 33.

Particulièrement, le collier 41 et le manchon 33 peuvent être coaxiaux ou sensiblement coaxiaux. Notamment, le collier 41 et le manchon 33 peuvent être disposés de sorte que l'axe principal 400 du collier 41 et l'axe d'extension 300 du manchon 33 sont confondus ou sensiblement confondus.

Lorsque le dispositif de fixation 1 ainsi assemblé est disposé dans l'agencement 2, le socle 31 du support 3 est disposé sur le panneau 21. Avantageusement, le pan inférieur 311 du socle 31 du support 3 peut être au moins en partie en contact de la première face 211 du panneau 21, notamment au contact d'au moins une partie d'un contour 232, compris dans la première face 211, de l'orifice 23 de sorte à recouvrir l'ensemble de l'orifice 23. De manière optionnelle, le pan inférieur 311 peut être en partie courbé de sorte à coopérer avec un panneau 21 sensiblement courbé et ainsi cacher un éventuel jour.

Le manchon 33 du support 3 du dispositif de fixation 1 s'étend au moins en partie au travers de l'organe d'absorption 4 et de l'orifice 23 du panneau 21. Notamment, le manchon 33 peut être caractérisé par une hauteur 335 supérieure ou égale à une hauteur 405 de l'organe d'absorption 4, notamment du collier 41 de l'organe d'absorption 4, de sorte à prévenir l'écrasement de celui-ci lors sur vissage de l'élément de fixation.

On entend par « hauteur 335 » du manchon 33 la dimension mesurée le long de l'axe d'extension 300 entre le pan inférieur 311 et l'extrémité libre 333 du manchon tandis qu'on entend par « hauteur 405 » de l'organe d'absorption 4 une dimension, notamment du collier 41, mesurée le long de l'axe principal 400 entre une face primaire 401, tournée vers le socle 31, et une face secondaire 402, destinée à être tournée vers l'élément 22.

De manière préférentielle, le manchon 33 peut présenter une hauteur 335 strictement supérieure à la hauteur 405 de l'organe d'absorption 4 lorsqu'il est réalisé selon l'alternative telle qu'illustré à la figure 3, c'est-à-dire lorsqu'il comprend des languettes 6 configurées pour être déformées et/ou déplacées.

En outre, la hauteur 335 du manchon 33 est supérieure ou égale à une épaisseur du panneau 21 et, de manière optionnelle, la hauteur 405 de l'organe d'absorption 4 peut être supérieure ou égale à une telle épaisseur du panneau 21

Ainsi, l'organe d'absorption 4 et/ou le manchon 33 du support 3 est au contact de l'élément de carrosserie ou de caisse 22. De manière particulière, l'organe d'absorption 4, notamment sa face primaire 401, peut également s'étendre au moins en partie au contact du pan inférieur 311 du socle 31 du support 3.

Selon une alternative non représentée, l'organe d'absorption 4 peut s'étendre au moins partiellement au contact d'un épaulement du support, un tel épaulement étant issu du pan inférieur 311 du socle 31 et disposé de sorte à entourer, au moins en partie, le manchon 33.

L'élément de fixation traverse alors le manchon 33 du socle 31 de sorte à fixer le panneau 21 sur l'élément de carrosserie ou de caisse 22 par exemple au niveau d'un trou perforé ou d'un insert 24 fileté compris dans l'élément de carrosserie ou de caisse 22.

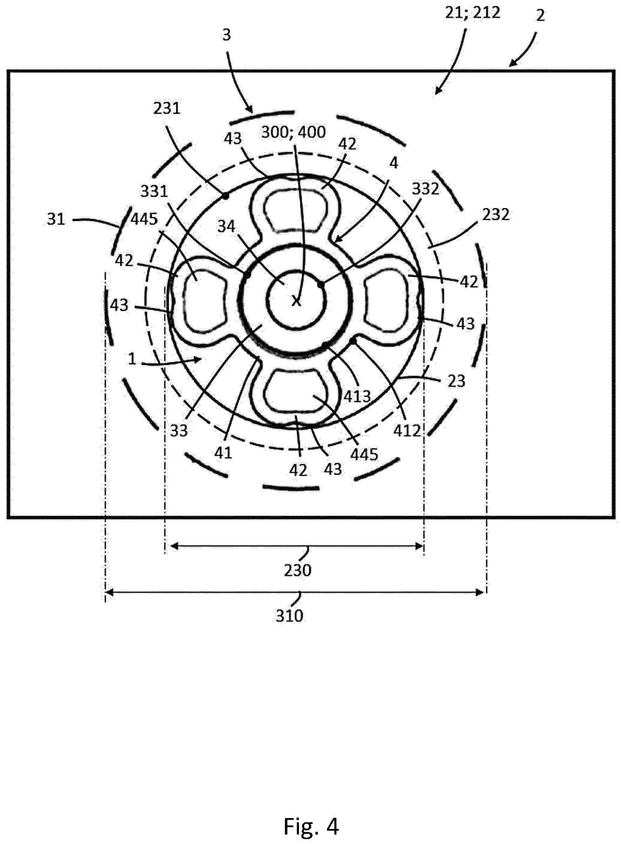

L'organe d'absorption 4 du dispositif de fixation 1 est disposé dans l'orifice 23 du panneau 21 de sorte que la face distale 43 de l'au moins un organe radial 42 s'étend au moins partiellement au contact du bord interne 231 de l'orifice 23. Egalement, de manière avantageuse, le manchon 33 et le collier 41 sont disposés dans une zone centrale de l'orifice 23, l'au moins un organe radial 42 s'étendant ainsi depuis la zone centrale de l'orifice 23 vers le bord interne 231 délimitant celui-ci. En d'autres termes, l'organe d'absorption 4 peut être configuré de sorte à centrer, ou sensiblement centrer, le dispositif de fixation 1, et donc l'élément de fixation, dans l'orifice 23 du panneau 21 lorsque l'organe d'absorption 4 est « au repos », c'est-à-dire lorsqu'il ne subit aucune contrainte mécanique et n'est pas déformé par le panneau 21, tel qu'illustré à la figure 4.

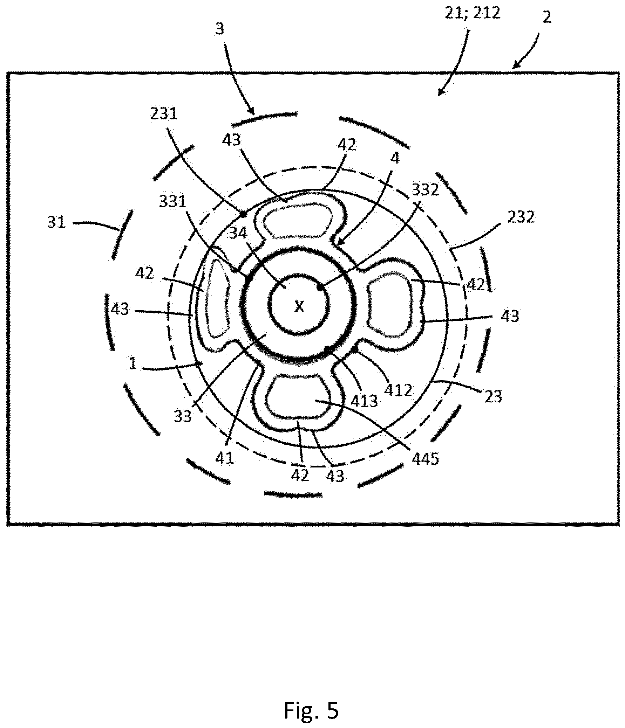

La figure 5 illustre un exemple d'une configuration « déformée » de l'organe d'absorption 4 pouvant être observée lorsque le panneau 21 est thermiquement déformé, que ce soit du fait d'une contraction thermique ou d'une expansion thermique. Dans un tel exemple, le panneau 21, et donc l'orifice 23, est déplacé par rapport à l'élément de carrosserie ou de caisse 22 et au dispositif de fixation 1 selon l'invention. Le support 3 ainsi que l'élément de fixation, non représenté, demeurent sensiblement immobiles. Similairement, la position du collier 41 demeure sensiblement inchangée. Le bord interne 231 de l'orifice 23 exerce une contrainte physique sur l'au moins un organe radial 42 de l'organe d'absorption 4, notamment au niveau d'au moins une partie de la face distale 43 de celui-ci. L'au moins un organe radial 42 est déformé par rapport à sa forme initiale, ou de « repos », de sorte à absorber, au moins en partie, la déformation thermique du panneau 21 et à protéger le dispositif de fixation 1.

Lorsque la déformation thermique cesse et que le panneau 21 reprend son positionnement initial, l'organe d'absorption 4 reprend graduellement sa forme initiale et son positionnement centré ou sensiblement centré au sein de l'orifice 23.

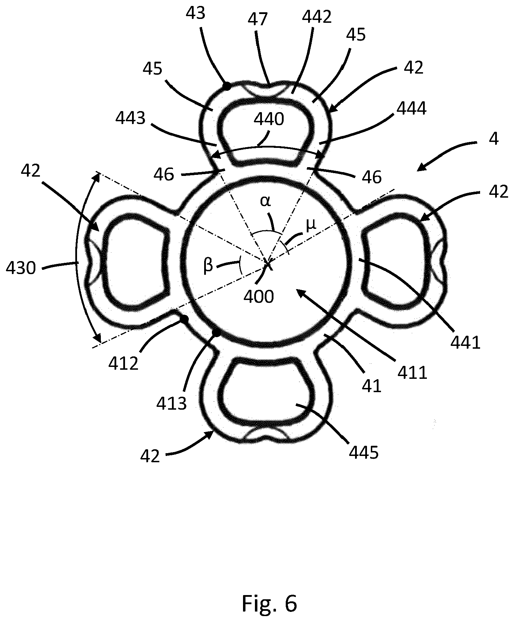

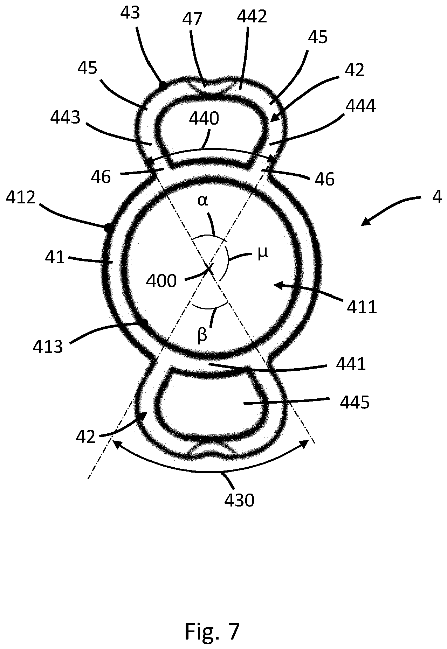

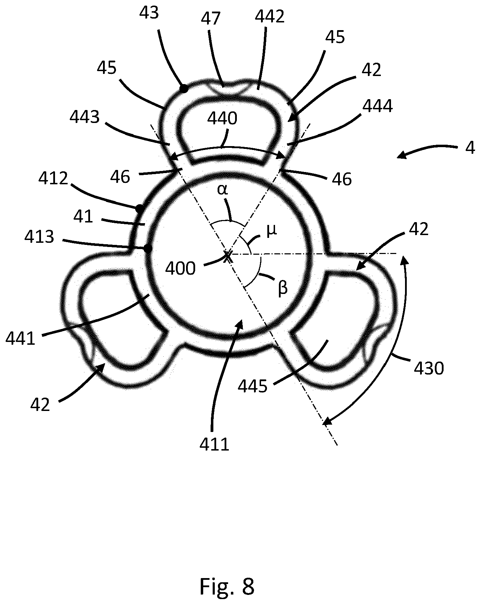

Les figures 6 à 8 détaillent des exemples de réalisation particuliers de l'organe d'absorption 4 du dispositif de fixation 1. Lesdits organes d'absorption 4 comprennent chacun une pluralité d'organes radiaux 42. Il est entendu que le nombre d'organes radiaux 42 illustré n'est en rien limitatif.

Aussi, dans l'ensemble de la description ci-après, toute caractéristique décrite relativement à un organe radial 42 peut être appliquée à tout ou partie de la pluralité d'organes radiaux 42 de l'organe d'absorption 4 considéré. En d'autres termes, lorsque l'organe d'absorption 4 comprend une pluralité d'organes radiaux 42, ceux-ci peuvent être identiques, sensiblement identiques ou peuvent présenter des caractéristiques distinctes.

L'au moins un organe radial 42 s'étend en saillie de la circonférence externe 412 du collier 41 au moins le long d'une direction radiale par rapport à l'axe principal 400. Il peut présenter une structure évidée et/ou fermée. On entend ici par « évidé » une absence ou un retrait de matière dans l'au moins un organe radial 42 visant à favoriser la déformation mécanique de celui-ci et pouvant être réalisé dans une zone centrale et/ latérale dudit organe. On entend par « fermé » une structure continue de l'au moins un organe radial 42 comprenant la face distale 43 et reliée à la circonférence externe 412 du collier 41 en au moins deux endroits distincts ou sur une portion non négligeable de celle-ci.

Dans les exemples illustrés aux figures 6 à 8, les organes radiaux 42 sont évidés et fermés. L'au moins un organe radial 42 comprend particulièrement une embase 441, laquelle est comprise dans la circonférence externe 412 du collier 41. L'au moins un organe radial 42 comprend également au moins un flanc distal 442, comportant la face distale 43, et au moins un flanc latéral reliant l'embase 441 et le flanc distal 442. En l'espèce, l'au moins un organe radial 42 définit une structure fermée assimilable à un « pétale », il comprend ainsi un premier flanc latéral 443 et un deuxième flanc latéral 444 reliant chacun une portion opposée du flanc distal 442 à l'embase 441. Avantageusement, lesdits embase 441, premier flanc latéral 443, flanc distal 442 et deuxième flanc latéral 444 s'étendent successivement et en continu de sorte à délimiter un évidement 445 de l'au moins un organe radial 42. De manière particulière, le premier flanc latéral 443 et le deuxième flanc latérale 444 sont reliés au flanc distal 442 au niveau de zones de jonctions distales 45 sensiblement arrondies. Egalement, le premier flanc latéral 443 et le deuxième flanc latérale 444 sont reliés à l'embase 441 au niveau de zones de jonctions proximales 46.

Selon une alternative non représentée, l'au moins un organe radial 42 peut présenter une structure évidée ouverte, celui-ci comprenant alors une embase 441, un flanc latéral et le flanc distal 442 de sorte à former une structure sensiblement en « L » s'étendant en saillie du collier 41 et reliée à la circonférence externe 412 de celui-ci au niveau de son embase 441.

De manière préférentielle et de sorte à favoriser la déformation de l'au moins un organe radial 42, l'embase 441 présente une dimension inférieure ou sensiblement inférieure à une dimension du flanc distal 442. Notamment, dans les exemples illustrés, les dimensions considérées sont une largeur 440 de l'embase 441 et une largeur 430 du flanc distal 442. On entend par « largeurs 440, 430 » des dimensions mesurées le long d'une direction orthogonale à l'axe principal 400 et délimitée par un secteur angulaire issu dudit axe principal 400.

En l'espèce, la largeur 440 de l'embase 441 est définie par un secteur angulaire α s'étendant entre une première demi-droite et une deuxième demi-droite toutes deux issues de l'axe principal 400. La première demi-droite passe par une portion externe de la zone de jonction proximale 46 du premier flanc latéral 443 à la circonférence externe 412 du collier 41 tandis que la deuxième demi-droite passe par une portion externe de la zone de jonction proximale 46 reliant le deuxième flanc latéral 444 à la circonférence externe 412 du collier 41.

Il en va de même pour la largeur 440 du flanc distal 442, les demi-droites considérées d'un secteur angulaire β passant par, ou étant tangentes à, des parties extrêmales du flanc distal 442 et/ou des zones de jonctions distales 45 reliant ledit flanc distal 442 aux flancs latéraux 443, 444.

Il est entendu que de telles dimensions, notamment largeurs 440, 430, peuvent être mesurées pour une surface sensiblement plane ou courbée selon la forme du collier 41 et/ou de l'au moins un organe radial 42.

De manière préférentielle, le secteur angulaire α définissant l'embase 441, notamment la largeur 440 de l'embase 441, est compris entre 20 et 160 °. De manière optionnelle, l'au moins un organe radial 42 comprend au moins un élément d'affaiblissement 47 configuré pour favoriser la déformation dudit organe radial 42. Notamment un tel élément d'affaiblissement 47 peut être compris dans le premier flanc latéral 443 et/ou dans le deuxième flanc latéral 444 et/ou dans le flanc distal 442 et/ou dans les zones de jonction proximales 46 ou distales 45 de l'un quelconque desdits flancs.

A titre d'exemple, l'élément d'affaiblissement 47 de l'au moins un organe radial 42 peut consister en une rainure et/ou en une réduction de l'épaisseur du flanc et/ou de la zone de jonction considérée et/ou en une encoche s'étendant sur tout ou parte de la hauteur 405 de l'organe d'absorption 4. Avantageusement, l'au moins un organe radial 42 peut comprendre une pluralité d'éléments d'affaiblissement 47.

Selon une caractéristique optionnelle non illustrée, l'organe d'absorption 4, notamment sa face primaire 401, peut comprendre un bossage de sorte à optimiser le maintien de l'organe d'absorption par rapport au support 3, lors d'opérations de manutention par exemple.

Lorsque l'organe d'absorption 4 comprend une pluralité d'organes radiaux 42, tel qu'illustrés dans les figures 6 à 8, ceux-ci sont disposés le long de la circonférence externe 412 du collier 41 de sorte que, lorsque l'organe d'absorption 4 est au repos et n'est pas déformé, les flancs, notamment les flancs latéraux 443, 444, d'organes radiaux 42 adjacents s'étendent à distance non nulle les uns des autres.

De manière particulière, les organes radiaux 42 adjacents sont séparés par un secteur angulaire µ, relativement à l'axe principal 400, compris entre 10 et 160°. En d'autres termes, le secteur angulaire µ définit un espacement entre des organes radiaux 42 adjacents, particulièrement entre leurs embases 441. Un tel espacement est défini par des demi-droites passant par les portions externes de zones de jonction proximales 46 comprises dans deux organes radiaux 42 distincts et adjacentes l'une à l'autre.

Selon une alternative non représentée, l'espacement séparant deux organes radiaux 42 adjacents peut être nul ou sensiblement nul. De manière particulière, la pluralité d'organes radiaux peut être régulièrement disposée le long de la circonférence externe 412 du collier 41, c'est-à-dire que l'organe d'absorption 4 présente une pluralité d'espacements, chacun défini par des secteurs angulaires µ sensiblement égaux ou égaux.

Alternativement, de tels secteur angulaire µ peuvent présenter des valeurs différentes.

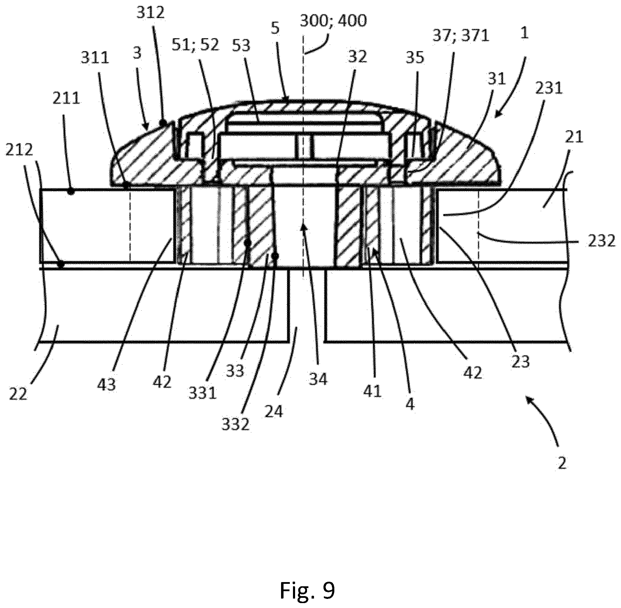

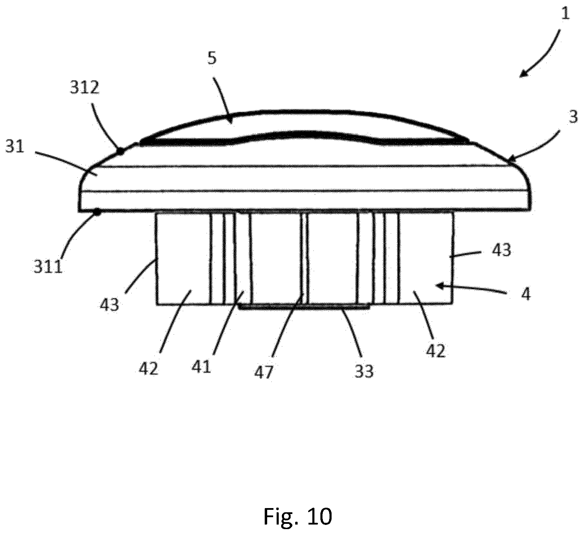

Les figures 9 à 11 illustrent un exemple d'un deuxième mode de réalisation du dispositif de fixation 1 selon l'invention. Le dispositif de fixation 1 selon le présent mode de réalisation est sensiblement identique à celui précédemment exposé, aussi l'ensemble de la description et des alternatives listées s'appliquent-elles *mutatis mutandis* à celui-ci. Le présent dispositif de fixation 1 se distingue du premier mode de réalisation en ce qu'il comprend au moins un capot 5 rapporté amovible configuré pour être fixé sur le socle 31. Un tel capot 5 est avantageusement configuré pour couvrir au moins en partie l'élément de fixation, notamment la tête dudit élément de fixation, et ainsi prévenir son desserrage.

En d'autres termes, le dispositif de fixation 1 selon le présent mode de réalisation comprend trois pièces distinctes. Similairement au support 3, le capot 5 est réalisé dans un matériau rigide, par exemple un polymère du type polyamide .

Le capot 5 présente une structure complémentaire du support 3. Notamment, de sorte à assurer la coopération entre le capot 5 et le support 3, le socle 31 comprend au moins un moyen primaire 37 de fixation et le capot 5 comprend au moins un moyen secondaire 51 de fixation, complémentaire du moyen primaire 37 de fixation. A titre d'exemple, le capot 5 peut être fixé par clipage sur le support 3. Le moyen primaire 37 de fixation peut ainsi consister en un ou plusieurs trous 371 ou découpes, traversant(e)s ou borgnes, aménagé(e)s dans le socle 31 du support 3 tandis que le moyen secondaire 51 de fixation peut consister en un ou plusieurs doigts 52 ou pattes s'étendant en saillie du capot 5. De manière alternative, la configuration inverse pourra être mise en œuvre de sorte que le moyen secondaire 51 de fixation consiste en un ou plusieurs trous ou découpes.

Il est entendu que la fixation du capot 5 sur le support 3 pourra être mise en œuvre par tout autre moyen connu permettant un assemblage et un désassemblage réversible du dispositif de fixation 1.

Ainsi, lorsque le capot 5 est fixé sur le support 3, le capot 5 et le socle 31 délimitent un logement 53 dans lequel s'étend au moins en partie l'élément de fixation, non représenté. Avantageusement, le capot 5 peut présenter une structure sensiblement bombée et/ou le capot 5 peut comprendre une portion en creux 54 configurée pour recevoir, au moins partiellement l'élément de fixation. Notamment, le logement 53 peut être délimité au moins en partie par un pan supérieur 312 du socle 31 et la portion en creux 54 du capot 5. Avantageusement, lorsque le socle 31 comprend un renfoncement 35, tel qu'illustré à la figure 1 ou 2, celui-ci participe à la formation dudit logement 53.

La présente invention propose ainsi un dispositif de fixation d'au moins un panneau sur un élément de carrosserie ou de caisse d'un véhicule, le dispositif de fixation étant destiné à être disposé dans au moins un orifice dudit panneau et comprenant un support et un organe d'absorption d'une déformation thermique dudit panneau, l'organe d'absorption comprenant au moins un organe radial au moins en partie élastiquement déformable et une face distale de l'organe radial configurée pour s'étendre au moins partiellement au contact d'un bord interne d'un orifice du panneau recevant le dispositif de fixation et pour absorber une déformation thermique dudit panneau. L'invention concerne également un agencement comprenant ledit dispositif de fixation et un véhicule équipé du dispositif de fixation et/ou dudit agencement.

La présente invention ne saurait toutefois se limiter aux moyens et configurations décrits et illustrés ici et elle s'étend également à tout moyen ou configuration équivalents et à toute combinaison techniquement opérante de tels moyens. En particulier la forme et les dimensions de l'au moins un organe radial et du socle peuvent être modifiés sans nuire à l'invention dans la mesure où ils remplissent *in fine* les fonctionnalités décrites et illustrées dans le présent document.

## Revendications

1. Dispositif de fixation (1) d'au moins un panneau (21) susceptible de subir une déformation thermique sur un élément de carrosserie ou de caisse (22) d'un véhicule, le dispositif de fixation (1) étant destiné à être disposé dans au moins un orifice (23) dudit panneau (21), le dispositif de fixation (1) comprenant au moins un support (3), configuré pour recevoir au moins un élément de fixation, et un organe d'absorption (4) d'une déformation thermique dudit panneau (21), **caractérisé en ce que** :
- le support (3) comprend un socle (31) percé d'au moins une perforation (32) traversante et un manchon (33) creux émergeant d'un pan inférieur (311) du socle (31) et bordant ladite perforation (32), la perforation (32) et le manchon (33) délimitant une zone de réception (34) de l'au moins un élément de fixation ;
- l'organe d'absorption (4) comprend un collier (41) centré sur un axe principal (400) et configuré pour entourer tout ou partie du manchon (33) du socle (31) ;
- l'organe d'absorption (4) comprend au moins un organe radial (42) au moins en partie élastiquement déformable et émergeant d'une circonférence externe (412) du collier (41), une face distale (43) de l'organe radial (42) la plus distante de l'axe principal (400) étant configurée pour s'étendre au moins partiellement au contact d'un bord interne (231) de l'orifice (23) du panneau (21) et pour absorber une déformation thermique du panneau (21) comprenant ledit orifice (23).

2. Dispositif de fixation (1) selon la revendication précédente, dans lequel l'organe d'absorption (4) est une pièce rapportée amovible montée sur le manchon (33) du support (3).

3. Dispositif de fixation (1) selon la revendication 1, dans lequel l'organe d'absorption (4) et le support (3) forment un ensemble monobloc.

4. Dispositif de fixation (1) selon la revendication précédente, dans lequel le manchon (33) du support (3) comprend au moins deux languettes (6) séparées par des encoches (61), les languettes (6) étant configurées pour être déformées et/ou déplacées par insertion de l'au moins un élément de fixation.

5. Dispositif de fixation (1) selon l'une des revendications précédentes, dans lequel l'au moins un organe radial (42) comprend au moins un élément d'affaiblissement (47) et/ou dans lequel l'au moins un organe radial (42) présente une structure évidée et/ou fermée.

6. Dispositif de fixation (1) selon l'une des revendications précédentes, dans lequel l'au moins un organe radial (42) comprend une embase (441), comprise dans la circonférence externe (412) du collier (41), un flanc distal (442), comprenant la face distale (43), et au moins un flanc latéral (443, 444) reliant l'embase (441) et le flanc distal (442).

7. Dispositif de fixation (1) selon la revendication précédente, dans lequel l'embase (441) présente une dimension (440) inférieure ou sensiblement inférieure à une dimension (430) du flanc distal (442).

8. Dispositif de fixation (1) selon la revendication 6 ou 7, dans lequel l'embase (441) de l'organe radial (42) est définie par un secteur angulaire (a), issu de l'axe principal (400), compris entre 20 et 160°.

9. Dispositif de fixation (1) selon l'une des revendications précédentes, dans lequel l'organe d'absorption (4) comprend un pluralité d'organes radiaux (42), des organes radiaux (42) adjacents étant séparés par un secteur angulaire (µ), relativement à l'axe principal (400), compris entre 10 et 160°.

10. Dispositif de fixation (1) selon l'une quelconque des revendications précédentes, dans lequel le manchon (33) et le collier (41) présentent des sections complémentaires circulaires, carrées, rectangulaires ou ellipsoïdales et/ou dans lequel une hauteur (335) du manchon est supérieure ou égale à une hauteur (405) de l'organe d'absorption (4), notamment du collier (41) de l'organe d'absorption (4).

11. Dispositif de fixation (1) selon l'une quelconque des revendications précédentes dans lequel le socle (31) du support (3) comprend au moins un renfoncement (35) configuré pour recevoir tout ou partie d'une tête d'un élément de fixation.

12. Dispositif de fixation (1) selon la revendication précédente, dans lequel au moins une partie d'un fond (351) du renfoncement (35) comprend un bossage (361) et/ou une rainure (362).

13. Dispositif de fixation (1) selon l'une des revendications précédentes, comprenant au moins un capot (5) rapporté amovible configuré pour être fixé sur le socle (31) et pour couvrir au moins en partie un élément de fixation.

14. Agencement (2) comprenant au moins un panneau (21), réalisé dans un matériau susceptible de subir une déformation thermique, et un élément de carrosserie ou de caisse (22) d'un véhicule, notamment un véhicule automobile, le panneau (21) étant superposé sur l'élément de carrosserie ou de caisse (22) le long d'au moins une direction, caractérisé en ce l'agencement (2) comprend au moins un dispositif de fixation (1) selon l'une des revendications 1 à 13 et en ce que:
- le panneau (21) comprend une première face (211), une deuxième face (212), opposée à la première face (211) et tournée vers l'élément de carrosserie ou de caisse (22), et un orifice (23) traversant délimité par un bord interne (231) ;
- l'organe d'absorption (4) du dispositif de fixation (1) est disposé dans l'orifice (23) du panneau (21) de sorte que la face distale (43) de l'au moins un organe radial (42) s'étend au moins partiellement au contact du bord interne (231) de l'orifice (23) ;
- le socle (31) est disposé sur le panneau (21), le manchon (33) du socle (31) du dispositif de fixation (1) s'étendant au moins en partie au travers du dispositif d'absorption et de l'orifice (23) du panneau (21) ;
- l'agencement comprend au moins un élément de fixation traversant le manchon (33) du socle (31) de sorte à fixer le panneau (21) sur l'élément de carrosserie ou de caisse (22).

15. Véhicule, notamment véhicule automobile, comprenant au moins un dispositif de fixation (1) selon l'une des revendications 1 à 13 et/ou au moins un agencement (2) selon la revendication 14.
